# EUROPEAN PATENT APPLICATION

(11) **EP 3 907 261 A1**
(43) Date of publication of application: **10.11.2021**
(21) Application number: 20020209.1
(22) Date of filing: 06.05.2020
(51) Int. Cl.: C09D 5/14, B05D 1/04, A01N 59/16

(54) **USE OF ANTIMICROBIAL COATING**

(71) Applicant: Hecosol GmbH, 96052 Bamberg (DE)
(72) Inventor: BRÜCKNER, Ralph, 96103 Hallstadt (DE)
(74) Representative: Wende, Christian Werner

(57) **Abstract**

The present invention relates to the use of an antimicrobial coating (10, 10', 10", 10"', 10"") of a substrate (12) for inactivation of an infectious agent, wherein the coating (10, 10', 10", 10"', 10"") is obtained by applying the coating (10, 10', 10", 10"', 10"") on a surface (14) of the substrate (12) by means of an electrostatic spraying method, and wherein the coating comprises at least one metal oxide and/or at least one metal salt.

Furthermore, the present invention relates to the use of a coating material for producing an antimicrobial coating (10, 10', 10", 10"', 10"") on a surface (14) of a substrate (12) for inactivation of an infectious agent,, wherein the coating (10, 10', 10", 10'", 10"") comprises at least one metal oxide and/or at least one metal salt.

## Description

The present invention relates to the use of an antimicrobial coating of a substrate for inactivating an infectious agent, especially a virus, the coating being obtained by applying the coating on a surface of the substrate by means of an electrostatic spraying method.

Surfaces of objects which are in direct or indirect contact with humans and animals and moreover exposed to a high bacterial load (also viral load, fungus load (also mould fungus load), yeast load, parasite load and/or spore load) have a demonstrable influence on the transmission of diseases and infections. Such surfaces can be represented, for example, by articles of clothing, lounges of buildings and public means of transport as well as their furnishings, medical implants, hygiene articles, face shields, means of payment or medical devices, etc.

In order to contain the unintentional transmission of diseases or infections originating from these surfaces, they are provided with antimicrobial coatings.

From DE 20 2006 018 695 U1, the use of an inorganic substance is already known which, in contact with an aqueous medium, causes the formation of hydrogen cations and serves to achieve an antimicrobial effect.

Furthermore, DE 10 2012 103 064 A1 discloses a hydrophilic composite with at least one carrier material and at least one antimicrobially active agent in the form of a metal or metal compound.

In addition, DE 10 2013 114 575A shows a method for producing an antimicrobially active composite material in which at least one molybdenum- and/or tungsten-containing inorganic compound is bonded to at least one further material.

DE 10 2013 114 573 A1 also shows a method for producing an antimicrobially active furniture and/or interior component, in which at least one molybdenum-containing inorganic compound is arranged at least in the region of a surface of the furniture and/or interior component.

Furthermore, DE 10 2013 104 284 A1 discloses a method for producing a doped or undoped mixed oxide for a composite material which serves to form antimicrobially active surfaces.

DE 10 2011 085 862 A1 further discloses a composition comprising at least one antimicrobially active substance which acts as a proton donor on contact with an aqueous medium, with the at least one active substance being at least partially encased with at least one coating material, the coating material having a lower water solubility than the active substance.

WO 2008/058707 A2 shows the use of an inorganic substance which, in contact with an aqueous medium, forms hydrogen cations which trigger an antimicrobial effect, the substance containing molybdenum and/or tungsten.

A cooling tower is known from DE 10 2007 061 965 A1 in which contamination with microorganisms and their proliferation can be avoided by means of internals made of composite materials and/or material composites and an antimicrobially active substance containing tungsten and/or molybdenum.

DE 600 22 344 T2 relates to a personal care product which has antimicrobial activity and is selected from antimicrobial, disposable absorbent articles, toothbrushes or baby soothers.

Further antimicrobially effective surfaces of objects are known from DE 199 36 059 A1, DE 103 42 258 A1, DE 103 23 448 A1, DE 101 20 802 A1, DE 100 13 248 A1, WO 95/020878 A1 and DE 10 2013 101 909 A1.

However, such antimicrobial coatings or objects do not always have a satisfactory coating quality or effectiveness and involve coating methods that are costly and complex to handle.

It would therefore be desirable to provide an antimicrobial coating by simplifying the actual coating procedure.

Further, it would be desirable to provide an antimicrobial coating to be used for inactivation of infectious agents, such as specific types of viruses, bacteria, fungi mould fungi and/or yeasts, in order to prevent infection of subjects.

It is therefore the task of the present invention to provide an antimicrobial coating of the type mentioned above in a beneficial manner, in particular, the antimicrobial coating should be usable for inactivation of infectious agents, in particular enveloped viruses.

This task is solved by the use of an antimicrobial coating according to claim 1 or claim 19. Preferred embodiments of the invention are disclosed in the dependent claims.

The invention is based on the fundamental idea that by applying an aqueous solution (which contains the metal oxide and/or metal salt) in micro-droplet form on the substrate, the solid antimicrobial coating is formed by evaporation. To this end, the metal oxide and/or the metal salt is/are very well soluble or suspendible in the aqueous solution. For this purpose, the aqueous solution / suspension has a nitrate content of about 28 %. In addition, especially metal oxides (e.g. TiO₂) alone or in combination with metal salts have particularly good and effective antimicrobial properties, making these types of compounds particularly suitable for an improved antimicrobial effect of the coating by a targeted alteration of their composition. The great advantage of this coating method is also that the droplets charged during the spraying method find a suitable discharge partner on the oppositely charged coating surfaces and hence are automatically attracted by this partner. This significantly improves the adhesion properties of the micro-droplets and the antimicrobial coating resulting therefrom. This also reduces the undesirable effect of aerosol or fine dust pollution during and/or after application. As a result, the area-specific density of the antimicrobial coating is improved, on the one hand, and its adhesion properties and durability on the other hand.

In general, an antimicrobial coating may be characterized by e.g. bactericidal, fungicidal, virucidal, sporicidal and/or levurocidal properties.

A major advantage of the present invention is the permanent germ reduction on surfaces by using antimicrobial coating.

Furthermore, provision may be made that the coating comprises at least one complex compound. Depending on the composition of the antimicrobial coating, the complex compound can be used to create new properties of the antimicrobial coating. In this context, for example, it is conceivable that the antimicrobial effectiveness of the coating is enhanced by the complex compound.

It is also conceivable that the structure of the metal oxide is described by the formula A_{c}O_{d}, where A is selected from the elements of group 4 of the periodic table of the elements (IUPAC nomenclature) and O is the element oxygen, wherein c and d, independently of each other, can assume a value between 0 and 24. The use of a metal oxide with the metals of group 4 of the periodic table of the elements (in brief: PSE) ensures a very good antimicrobial effectiveness of this coating. These properties can be influenced even more freely and specifically by a targeted selection of the composition, characterized by the indices c and d. It should be noted here that the designation of group 4 of the PSE refers to the current convention of IUPAC. All other designations of PSE groups listed in this disclosure also refer to the current IUPAC convention.

Furthermore, it is conceivable that the structure of the metal oxide is described by the formula AO₂, wherein A is selected from the elements of Group 4 of the periodic table of the elements (IUPAC nomenclature) and O is the element oxygen, the metal oxide being in particular TiO₂, ZrO₂ or HfO₂. In particular the metal dioxides of group 4 of the PSE have a very good antimicrobial effectiveness and are therefore suited for use in antimicrobial coating in a particularly advantageous way. Consequently, the antimicrobial effectiveness of the coating can be further increased.

It is also possible that the structure of the metal oxide is described by the formula MeₑO_{d}, wherein Me is selected from the elements of group 6 of the periodic table of the elements (IUPAC nomenclature) and O is the element oxygen, wherein d and e, independently of each other, can assume a value between 0 and 100, preferably 0 and 40, most preferably 0 and 24. Such a structure of the metal oxide enables a variety of catalytic properties of the antimicrobial coating. In this context, metal oxides composed of molybdenum Mo and tungsten W should be mentioned in particular, since corresponding chromium compounds have a very pronounced toxicity. Their redox potential and their acidic properties can be mentioned as the mechanism of action, which has an additional positive effect on the effectiveness of the antimicrobial coating.

Furthermore, it may be provided that the structure of the complex compound is described by the formula A_{c}B_{d}XₙMeₑB_{f} or XₙMeₑB_{f}, wherein A is selected from the elements of group 4, B is selected from the elements of group 15 or 16, X is selected from the elements of groups 5, 7, 8, 9, 10, 11, 12, 13, 14, 15 from the lanthanides or the actinides, and Me is selected from the elements of group 6 of the periodic table of the elements (IUPAC nomenclature), and wherein c, d, n, e and f, independently of one another, can assume a value between 0 and 1000, preferably 0 and 24. Since complex compounds of this type also have good antimicrobial properties, the use of this type of complex compound in an antimicrobial coating is also particularly advantageous. In this context, it is also conceivable that such complex compounds are added to lacquers and paints (e.g. anti-fouling lacquers or paints) or sol gels or synthetic resins such as melamine resin, polyurethane or silicone in the form of a suspension or as a solid after drying, which thus acquire antimicrobial properties.

Further, it may be provided that the complex compound is mixed with a (solid) matrix (e.g. elastomers, duromers or thermoplastics) either as a suspension or by compounding, melting or grinding. The antimicrobial matrices obtained may be brought into their final form by brushing, spraying, thermoplastic processing or 3D printing.

It is also conceivable that the structure of the complex compound is described by the formula AO₂XₙMeO_{y} or XₙMeO_{y}, wherein A is selected from the elements of group 4, X is selected from the elements of groups 5, 7, 8, 9, 10, 11, 12, 13, 14, 15 from the lanthanides or the actinides, and Me is selected from the elements of group 6 of the periodic table of the elements (IUPAC nomenclature) and O is the element oxygen, wherein n can assume a value between 0 and 24 and/or wherein y can assume a value between 0 and 1000, and the complex compound comprising in particular molybdates, polyoxomolybdates, tungstates (wolframates) or chromates. The complex compound of formula AO₂XₙMeO₄ has in particular a synergetic effect with a view to enhancing the antimicrobial properties or effects of the antimicrobial coating. This is because a complex compound of the formula AO₂XₙMeO₄ has a stronger antimicrobial activity than its constituents with the formulae AO₂ or XₙMeO₄. The complex compounds with this composition are present in particular partially in the form of colorless complexes of the form TiO₂*XₙMeO₄ and can be incorporated particularly advantageously into plastics (e.g. silicone, PU, etc.) or building materials (e.g. cement), which thereby exhibit antimicrobial properties at least on their surface.

Furthermore, it is conceivable that the structure of the complex compound is described by the formula AO₂MeₑO_{d}, wherein A is selected from the elements of group 4, Me is selected from the elements of group 6 of the periodic table of the elements (IUPAC nomenclature) and O is the element oxygen, wherein d and e, independently of each other, can assume a value between 0 and 100, preferably 0 and 40, most preferably 0 and 24. Since also this type of complex compound has enhancing effects on the antimicrobial effectiveness of the antimicrobial coating, its use is also particularly advantageous in this respect.

Furthermore, it is possible that the structure of the metal oxide and/or metal salt is described by the formula AO₂XBO₃ or XBO₃, wherein A is selected from the elements of group 4, X is selected from the elements of groups 5, 7, 8, 9, 10, 11, 12, 13, 14, from the lanthanides or the actinides, and B is selected from the elements of group 15 or 16 of the periodic table of the elements (IUPAC nomenclature) and O is the element oxygen, and the metal oxide and/or metal salt being in particular TiO₂AgNO₃ or AgNO₃. This type of metal oxide and/or metal salt has in particular enhancing effects on the antimicrobial effectiveness of the antimicrobial coating under darkened environmental conditions and/or total darkness. Especially in situations where the coating is used under low light incidence or no light incidence, e.g. for the internal coating of pipelines or in the case of implants, their use is particularly advantageous.

In addition, it may be provided that the coating is designed in the form of a matrix structure which comprises a plurality of islands spaced apart from one another, and wherein the islands have a diameter in a range in particular from about 0.1 µm to about 500 µm, preferably from about 1 µm to about 200 µm, particularly preferably from about 2 µm to about 100 µm, and wherein the islands are each spaced apart from one another in accordance with their diameter. The close spacing of the individual islands relative to each other allows their homogeneous distribution on the substrate and, as a result, a high antimicrobial effectiveness of the coating with a simultaneously optimized material input of the metal oxides or metal salts used. Since the islands are applied on the substrate by means of the aforementioned electrostatic spraying method, their adhesion to the substrate can also be improved.

In this respect, the sprayed and deposited micro-droplets evaporate very quickly (e.g. at room temperature) within only 1 to 2 minutes and leave a transparent TiO₂ matrix in the form of said islands.

It is also conceivable that the islands comprise clusters formed by TiO₂ and ZnMoO₄. The very effective antimicrobial properties of TiO₂ have been known for a long time. By adding ZnMoO₄, these antimicrobial properties can be synergetically increased compared to the two individual components, whereby the antimicrobial effectiveness of the coating can be further increased on the whole. A further essential aspect of applying water-soluble titanium dioxide on the substrate by means of the suspension or aqueous solution and thus working as a basic matrix, is the positive charge in the solid state. It retains this positive charge of the titanium dioxide even in the dry state, especially after separation from the aqueous-acidic environment (pH < 6.8). In this connection, species of the form Ti-O(H⁺)-Ti as well as O-Ti⁺-O occur. Furthermore, compounds with a permanent positive charge (e.g. quaternary ammonium compounds such as PHMB) are known to attract the negatively polar bacteria in their outer shell, thus preventing them from being transported back into their respective habitat. In addition, the positive charge leads to a structural change of the bacterial membrane and to a dysfunction of the ion channels. As a result, cell homeostasis is brought out of balance and the microorganism dies even more effectively.

It is also conceivable that the islets have a surface which is formed like a pan with a central region and an edge region rising radially outwards with respect thereto. This way of shaping increases the surface of the islands in particular, which makes it possible, on the one hand, to create a larger effective surface of the individual islands. On the other hand, the total effective surface of the antimicrobial coating is also increased. The pan-like structure of the individual island surfaces also provides better protection, especially for the lowered central region of the individual islands, against mechanical influences, e.g. by means of a cleaning cloth, which allows to further increase the durability of the antimicrobial coating.

Furthermore, it is possible that the islands have a convex surface which is formed with a central region and an edge region that flattens out radially outwards with respect thereto. This way of convex shaping also increases the surface area of the individual islands, which makes it possible to create a larger effective surface of the individual islands, on the one hand. On the other hand, the total effective surface of the antimicrobial coating is also increased.

Furthermore, provision may be made that the surface of the islands has a wrinkled structure, the wrinkles each having a width of about 10 µm, preferably about 5 µm, particularly preferably about 2 µm, so that the surface of the islands of the matrix structure is enlarged. As already described above, the wrinkles additionally increase the effective surface of the individual islands and consequently also the entire surface of the antimicrobial coating. The antimicrobial effectiveness of the entire coating can thus be improved or increased.

It is also conceivable that the surface of the coating has hydrophilic properties. The hydrophilic properties of the coating further improve its antimicrobial effectiveness. This circumstance can be explained by the fact that hydrophilic surfaces, in contrast to hydrophobic surfaces, bind bacteria or microorganisms on the surface and prevent a retransfer to their habitat, for instance room air or water. Moreover, the hydrophilic properties facilitate the cleaning of the antimicrobial coating, since a monomolecular water layer forms between the dirt (e.g. cell debris) and the surface.

It is also conceivable that the antimicrobial properties of the coating are available independently of light incidence, in particular UV light incidence. The independence of certain coating compounds from light incidence has considerable advantages, especially under darkened environmental conditions and/or total darkness of the antimicrobial coating (e.g. TiO₂*AgNO₃). Finally, the use of antimicrobial coating can be made much more variable and its application conditions can be extended. In this context, for example, application conditions in objects or components are conceivable that are only partially or never exposed to light. In the context of this invention, light incidence can also be understood to mean, in particular, UV light incidence from a natural and/or non-natural light source (e.g. outdoors). These can be, for example, coatings of pipelines or containers, implants, filters, hygiene articles, catheters, adhesives, personal care products, varnishes, polymer materials, prostheses, stents, silicone membranes, wound dressings, fittings, credit cards, housings, coins, bank notes, parts of the interior equipment of public means of transport, etc.

Furthermore, it is possible that the antimicrobial properties of the coating can be enhanced by light incidence, especially UV light incidence. The enhancement of the antimicrobial coating by UV light incidence especially has the advantage of an even stronger antimicrobial effect of this coating. Since the antimicrobial coating is often used under exposed or partially exposed conditions, the use of the antimicrobial coating can be made even more variable or extended.

Furthermore, it is conceivable that the electrostatic spraying method described above is used for coating at least one substrate, and that this method comprises at least the following steps:
- providing a substrate;
- coating the substrate with an aqueous solution or suspension in droplet form by the electrostatic spraying method, the aqueous solution or suspension comprising at least one metal oxide and/or at least one metal salt soluble therein, whereby the aqueous solution or suspension has antimicrobial properties; and
- forming a solid, antimicrobial coating on the substrate in the form of a matrix structure by evaporation of the aqueous and/or liquid phase from the aqueous solution or suspension, so that the metal oxide and/or the metal salt is/are contained in the matrix structure of the coating.

The electrostatic spraying method is particularly advantageous with regard to improved properties in terms of adhesion of the antimicrobial coating on the substrate. By means of the electrostatic spraying method, the charged droplets first find an oppositely charged discharge partner on the oppositely charged substrate, so that they are automatically attracted by it. This also reduces the risk of fine dust pollution during application. As described above, after spraying on the substrate, the micro-droplets deposited on it evaporate (e.g. at room temperature) very quickly within only 1 to 2 minutes, leaving behind a transparent matrix of the coating components (especially a TiO₂ matrix) in the form of small islands.

In particular, it may be provided that - before addition to the aqueous solution or suspension - the metal oxide is present in the form of nanoparticles with an average size of in particular smaller than about 100 nm, preferably smaller than about 20 nm, particularly preferably smaller than about 10 nm, and wherein the aqueous solution or suspension has a pH value of in particular smaller than or equal to about 6.8, preferably smaller than or equal to about 2, particularly preferably smaller than or equal to about 1.5. Since the metal oxide, e.g. TiO₂, is present in the form of nanoparticles before being added to the aqueous solution or suspension, it is very readily soluble in water. The good water solubility is further enhanced by the decreasing size of the individual nanoparticles, which means that a size of the nanoparticles smaller than about 10 nm is particularly advantageous in this context. In addition, a suitable metal oxide (e.g. TiO₂) can retain this positive charge even in the dry state after separation from the aqueous-acidic environment (pH < 6.8). This results in an even better effectiveness of the antimicrobial coating.

It is also conceivable that the metal oxide is contained in the aqueous solution or suspension in a range in particular from about 0.005 % to about 20 %, preferably from about 0.01 % to about 10 %, particularly preferably from about 0.1 % to about 5 %. The electrostatic spraying method allows to apply aqueous solutions especially with a metal oxide content from 0.01 to 10%. For the resulting solid matrices of the metal oxides, using a content of 1.5% (15 g/l) is particularly advantageous. The final concentration is then particularly advantageous at about 50 mg/m² (= 50 µg/cm²).

It is also conceivable that the aqueous solution or suspension contains at least one complex compound. In particular, the germ reducing or antimicrobial properties of the coating can be varied or extended advantageously by complex compounds. In this way, for example, the antimicrobial effectiveness of the coating can be improved or adapted to external conditions such as light incidence or UV light incidence or no light incidence.

Furthermore, provision can be made that at least during the coating of the substrate, the substrate is electrically positively or negatively charged and the droplets of the aqueous solution or suspension are electrically positively or negatively charged. It is particularly important to note in this context that the droplets must always have a charge which is opposite to that of the substrate, so that an improved and particularly advantageous application of the coating can be achieved and the resulting improved adhesion properties of the coating in the solid state can be obtained in the first place.

Furthermore, the use of an antimicrobial coating of a substrate for inactivation of an infectious agent may be provided, wherein the coating is obtained by applying the coating on a surface of the substrate by means of an electrostatic spraying method, and wherein the coating comprises at least one metal oxide and/or at least one metal salt. As already explained above, especially metal oxides (e.g. TiO₂) alone or in combination with metal salts have particularly good and effective antimicrobial properties, whereby these types of compounds are suitable in a particularly advantageous way for an improved and more varied antimicrobial effect of the coating. The coating material may also be available in the form of an anti-fouling lacquer and/or an anti-fouling paint, a sol-gel or synthetic resin such as melamine resin, silicone or polyurethane, wherein at least one complex, in particular at least one TiO₂*XₙMeO₄ complex, is added to the coating material in the form of a suspension or as a solid after drying.

The infectious agent may be a bacterium, especially one of Escherichia coli, Pseudomonas aeruginosa, Staphylococcus aureus or Listeria monocytogenes, and/or a fungus, especially one of Candida albicans, Candida auris, Aspergillus fumigatus or Penicillium sp.) and/or a parasite.

The infections agent may also be a virus, such as rhinovirus, norovirus or coronavirus.

In general, a virus may be a ssDNA virus, dsDNA virus, dsRNA virus, (+)ssRNA virus, (-)ssRNA virus, ssRNA-RT virus, dsDNA-RT virus.

Further, a virus may be an enveloped virus or a naked virus.

The virus may be characterized by an icosahedral capsid symmetry or helical capsid symmetry or complex capsid symmetry.

Further, the virus may be of the family of Reoviridae, Picornaviridae, Caliciviridae, Togaviridae, Arenaviridae, Flaviviridae, Orthomyxoviridae, Paramyxoviridae, Bunyaviridae, Rhabdoviridae, Filoviridae, Coronaviridae, Astroviridae Bornaviridae, Arteriviridae, Hepeviridae.

Further, regarding the family of Coronaviridae, the virus may be of the subfamily of Orthocoronavirinae or Letovirinae.

Further, regarding the family of Orthocoronavirinae, the virus may be a coronavirus species, especially a severe acute respiratory syndrome coronavirus, severe acute respiratory syndrome coronavirus 2, or Middle East respiratory syndrome-related coronavirus.

Inactivation of an infectious agent may be understood as reducing completely or reducing partially the infectiousness of an infectious agent. Alternatively, and/or additionally, inactivation of an infectious agent may be understood as rendering an infectious agent non-viable and/or no longer capable of growing, replicating, infecting a subject or causing disease. The object of viral inactivation, for instance, is to improve viral safety so that transmissions no longer occur.

It is also conceivable that the coating is an antimicrobial coating as described above. As explained above, the great advantage of this coating method is that the droplets charged during the spraying procedure find an effective discharge partner on the oppositely charged substrate and are thus automatically attracted by it. This significantly improves the adhesion properties of the micro-droplets and the resulting antimicrobial coating.

Furthermore, the use of a coating material for producing an antimicrobial coating on a surface of a substrate for inactivation of an infectious agent, wherein the coating comprises at least one metal oxide and/or at least one metal salt, is provided.

In addition, it is conceivable that a surface of the coating is a working surface and/or is at least temporarily in contact with ambient air and/or fluids and/or liquids. In the case of a working surface (e.g. a desk or keyboard), the antimicrobial coating according to the invention can noticeably reduce a user's microbial load, which has a particularly positive effect on the user's well-being and health. To improve the air quality, e.g. in living rooms or clean rooms, the antimicrobial coating according to the invention is also very advantageous, as the reduced particle load in the air has a positive effect on the production conditions in the clean rooms (fewer defective components) or allows the air quality in the living rooms to be further improved. To improve the quality of drinking water, the antimicrobial coating can be applied, for example, as an internal coating on drinking water pipes, containers and fittings.

Further details and advantages of the invention will now be explained in more detail by means of the exemplary embodiments shown in the drawings wherein:
- Fig. 1: shows in an enlarged SEM illustration a top view of a first exemplary embodiment of an antimicrobial coating according to the invention;
- Fig. 2: shows in two enlarged illustrations in each case a top view of the first exemplary embodiment of the coating according to Fig. 1;
- Fig. 3: shows in two enlarged perspective illustrations the hydrophilic properties of the first example of the coating according to Fig. 1;
- Fig. 4: shows a general tabular characterization of the antimicrobial effectiveness (according to ISO 22196) of antimicrobial coatings;
- Fig. 5: shows a tabular illustration of the antimicrobial effectiveness of further exemplary embodiments of an antimicrobial coating according to the invention;
- Fig. 6: shows two further tabular illustrations of the antimicrobial effectiveness of further exemplary embodiments of an antimicrobial coating according to the invention;
- Fig. 7: shows a further tabular illustration of the antimicrobial effectiveness of further exemplary embodiments of an antimicrobial coating according to the invention;
- Fig. 8: shows a further tabular illustration of the antimicrobial effectiveness of further exemplary embodiments of an antimicrobial coating according to the invention;
- Fig. 9a: shows a schematic illustration of an exemplary embodiment of an electrostatic spraying method for obtaining an antimicrobial coating according to the invention;
- Fig. 9b: is an enlarged illustration of an island;
- Fig. 10: shows a diagram of a comparison of the temporal germ reduction of an exemplary embodiment of the coating of the invention according to Fig. 5 in darkness and light;
- Fig. 11: is a bar chart of the antimicrobial effectiveness of an exemplary embodiment of the coating of the invention according to Fig. 5 for a 2-fold, 3-fold and 4-fold coating of a Petri dish;
- Fig. 12: is a bar chart with a comparison of the temporal germ reduction of three exemplary embodiments of the coating of the invention according to Fig. 5 in darkness and light;
- Fig. 13a: is a diagram of a comparison of the temporal germ reduction of two exemplary embodiments of the coating of the invention according to Fig. 5 in darkness and light;
- Fig. 13b: shows selected data points from Fig. 13a in tabular illustration;
- Fig. 14a: is a tabular illustration of the antimicrobial effectiveness of an exemplary embodiment of the coating according to Fig. 5 against the germ Staphylococcus aureus;
- Fig. 14b: shows a temporal reduction development of the germ Aspergillus fumigatus on an uncoated Petri dish and one coated with an exemplary embodiment of the coating according to Fig. 5;
- Fig. 15: shows a temporal reduction development of the germ Candida albicans on an uncoated petri dish and one coated with an exemplary embodiment of the coating according to Fig. 5; and
- Fig. 16a: is a bar chart with a comparison of the temporal germ reduction of E. coli for six exemplary embodiments of the coating of the invention according to Fig. 5 and Fig. 6 in darkness.
- Fig. 17: shows examples for the effect of the use of an antimicrobial coating according to the present invention for inactivating different infectious agents;
- Fig. 18: shows an example of a workflow for testing the effect of the use of an antimicrobial coating 10 of a substrate 12 for inactivation of human rhinovirus 16 HRV; and
- Fig. 19: the effect of the use of an antimicrobial coating 10 of a substrate 12 for inactivation of human rhinovirus 16 HRV.

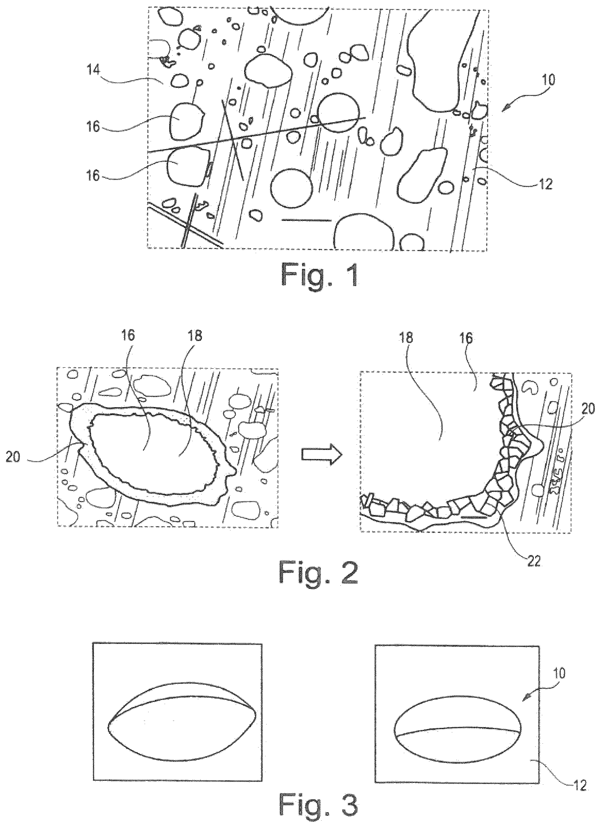

Fig. 1 shows an enlarged plan view of a first embodiment of an anti-microbial coating 10 of a substrate 12 according to the invention.

The anti-microbial coating 10 of the substrate 12 is obtained by applying the coating 10 to a surface 14 of the substrate 12 by means of an electrostatic spray method.

The coating 10 contains at least one metal oxide.

The structure of the metal oxide is described by the formula A_{c}O_{d}.

Accordingly, A is selected from the elements of group 4 of the periodic table of the elements (IUPAC nomenclature) and O is the element oxygen.

Furthermore, the indices c and d can independently of each other have a value between 0 and 24.

The structure of the metal oxide is described even more specifically by the formula AO₂.

Here, A is also selected from the elements of group 4 of the periodic table of the elements (IUPAC nomenclature) and O is the element oxygen.

The metal oxide is particularly TiO₂ (or ZrO₂ or HfO₂).

The coating 10 according to Fig. 1 is formed in the form of a matrix structure in which the TiO₂ is contained.

According to Fig. 1, this matrix structure has several islands 16 spaced apart to one another.

These islands 16 have a diameter in a range particularly from about 2 µm to about 100 µm.

In addition, the islands 16 are each spaced apart according to their diameter.

Besides TiO₂, the islands 16 also contain AgNO₃.

In general, the islands 16 can comprise comprise clusters formed by TiO₂ and ZnMoO₄.

Fig. 2 shows two further enlarged representations of a respective plan view of the first embodiment of the coating according to Fig. 1.

A SEM analysis of an island shows a flat pan in the central area 18 with a clear elevation at the edges of the TiO₂-islands.

Accordingly, the islands 16 have a surface that is pan-like with a central area 18 and an edge area 20 radially outwardly elevating thereto.

In a further embodiment (not shown in the figures) the islands 16 have a convex surface.

This surface is also formed with a central area and an edge area radially outwardly flattening thereto.

Furthermore, Fig. 2 shows the surfaces of the islands 16, which have a furrowed structure.

The furrowed structure is especially formed in the edge area 20 of the individual islands 16.

The furrows 22 each have a width of about 2 µm, so that the surface of the islands 16 of the matrix structure is enlarged.

Fig. 3 also shows in two enlarged perspective views the hydrophilic properties of the first embodiment of coating 10 according to Fig. 1.

In this sense, the two representations of Fig. 3 show a comparison of an uncoated surface 12 (left) and a coated surface 12 (right).

The surface of coating 10 with the hydrophilic properties (right) has a clearly recognisable hydrophilic effect.

This is particularly evident in the visible flattening of the water droplet shape.

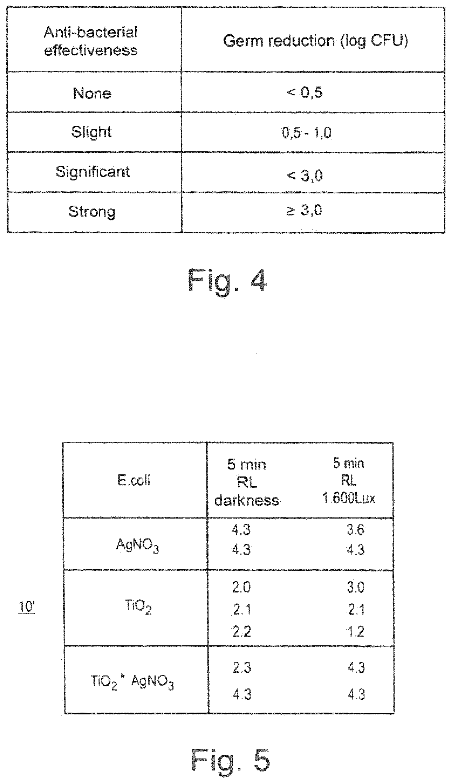

Fig. 4 shows a tabular characterization of the anti-microbial effectiveness of anti-microbial coatings in general.

The anti-microbial or anti-bacterial effectiveness of different coatings can be classified according to Fig. 4 as "none", "slight", "significant" and "strong".

The reduction factor R_{L} is used to quantify the anti-microbial effectiveness.

This reduction factor R_{L} can be represented by the following mathematical relationship: R_{L} = log (A/B).

Here, A corresponds to an average value of so-called colony forming units (CFU) per ml on a reference surface without anti-microbial coating.

Consequently, B corresponds to an average value of colony forming units (CFU) per ml on a reference surface with an anti-microbial coating according to the present invention.

The colony-forming units (CFU) can also be interpreted as the specific total germ count per ml.

The internationally recognized JIS test (Japanese Industrial Standard Test, JIS Z 2801), which corresponds to ISO standard 22196 in Europe, is used for objective assessment of the germ reducing effect of surfaces.

Thereby, Petri dishes coated with the test substance are first wetted with a germ suspension (e.g. E. coli or Staphylococcus aureus), covered with a foil and then incubated at 35°C and 95% humidity.

Here, the experiments can be performed in the dark or under defined lighting conditions (e.g. by means of LED light at 1600 lux).

At the end of the incubation, the number of surviving germs is determined and a reduction factor R_{L} is calculated as described above.

Fig. 5 shows a tabular representation of the anti-microbial effectiveness of further embodiments of an anti-microbial coating 10' according to the invention.

The anti-microbial effectiveness against E. coli bacteria is shown in Fig. 5 for a duration of 5 min in darkness and under defined light conditions at 1600 lux.

The embodiments of the respective anti-microbial coating 10' according to the invention as shown in Fig. 5 essentially have the same structural (macroscopic) and functional features as the embodiments shown in Fig. 1 and 2.

Merely the following differences shall be discussed:
The structure of the metal oxide and metal salt or only the metal salt contained in the anti-microbial coating is generally described by the formula AO₂XBO₃ or XBO₃ according to Fig. 5.

Wherein A is selected from the elements of group 4, X is selected from the elements of group 11, and B is selected from the elements of group 15 of the periodic table of the elements (IUPAC nomenclature) and O is the element oxygen.

Particularly, the metal oxide and the metal salt are TiO₂AgNO₃ or the metal salt is AgNO₃.

In another example (not shown), the anti-microbial effectiveness of TiO₂ against E. coli bacteria was assessed for a duration of 0.5h, 4h and 24h both in darkness and under defined light conditions at 1600 lux.

At the end of the incubation, there was no statistical significant difference between the number of surviving germs determined and the reduction factor R_{L} of the darkness group compared to the light-group.

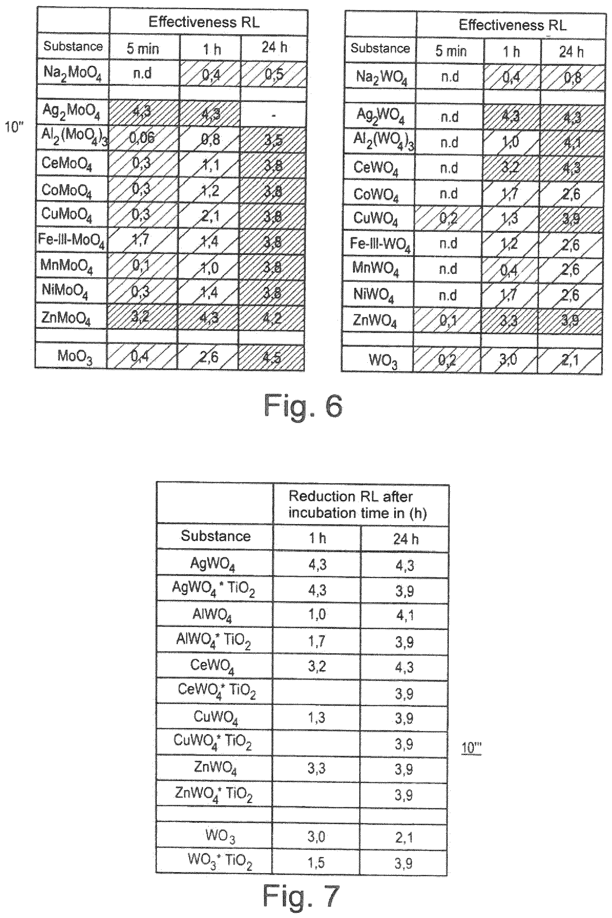

Fig. 6 shows a further tabular representation of the anti-microbial effectiveness of further embodiments of an anti-microbial coating 10" according to the invention.

The anti-microbial effectiveness against E. coli bacteria is shown in Fig. 6 for a duration of 5 min, 1 h and 24 h under defined light conditions at 1600 lux.

The embodiments of the respective anti-microbial coating 10" shown in Fig. 6 essentially have the same structural (macroscopic) and functional features as the embodiments shown in Fig. 1 and 2.

Merely the following differences shall be discussed:
The coating 10" contains at least one complex compound.

The structure of the complex compound is generally described by the formula A_{c}B_{d}XₙMeₑB_{f} or XₙMeₑB_{f}.

Wherein A is selected from the elements of group 4, B is selected from the elements of group 15 or 16, X is selected from the elements of groups 5, 7, 8, 9, 10, 11, 12, 13, 14, 15 of the lanthanoids, or the actinides and Me is selected from the elements of group 6 of the periodic table of the elements (IUPAC nomenclature).

In addition, c, d, n, e and f can independently of each other take a value between 0 and 1000, preferably 0 and 24.

Particularly, the structure of the complex compound is described by the formula AO₂XₙMeO_{y} or XₙMeO_{y}.

Wherein A is selected from the elements of group 4, X is selected from the elements of groups 5, 7, 8, 9, 10, 11, 12, 13, 14, 15 of the lanthanoids, or the actinides, and Me is selected from the elements of group 6 of the periodic table of the elements (IUPAC nomenclature) and O is the element oxygen.

In addition, n can have a value between 0 and 24.

Further, y can have a value between 0 and 1000.

Particularly, the structure of the complex compound can be described by the formula AO₂XₙMeO₄ or XₙMeO₄.

According to Fig. 6, the complex compound contains particularly molybdates or tungstates.

The molybdates comprise particularly (NH₄)₆Mo₇O₂₄, Na₂MoO₄, Ag₂MoO₄, Al₂(MoO₄)₃, CeMoO₄, CoMoO₄, CuMoO₄, Fe-III-MoO₄, MnMoO₄, NiMoO₄ or ZnMoO₄.

The anti-microbial coating 10" can be formed either from these molybdates or from a compound of these molybdates with TiO₂.

As further shown in Fig. 6, the anti-microbial coating 10" can also include MoO₃ or a compound of TiO₂ and MoO₃ instead of the molybdates.

The tungstates, on the other hand, comprise particularly Na₂WO₄, AgWO₄, AlWO₄, CeWO₄, CoWO₄, CuWO₄, Fe-III-WO₄, MnWO₄, NiWO₄ or ZnWO₄.

The anti-microbial coating 10" can either be formed from these tungstates or from a compound of these tungstates with TiO₂.

As can be additionally seen in Fig. 6, the anti-microbial coating 10" can also include WO₃ or a compound of TiO₂ and WO₃.

Fig. 7 shows a further tabular representation of the anti-microbial effectiveness of further embodiments of an anti-microbial coating 10'" according to the invention.

The anti-microbial effectiveness against E. coli bacteria is shown in Fig. 7 for a duration of 1 h and 24 h under defined light conditions at 1600 lux.

The embodiments of the respective anti-microbial coating 10'" shown in Fig. 7 essentially have the same structural (macroscopic) and functional features as the embodiments shown in Fig. 1 and 2.

Merely the following differences shall be discussed:
The representation in Fig. 7 particularly serves to show the difference in the anti-microbial effectiveness of the anti-microbial coating, which on the one hand is formed from a tungstate and on the other hand is formed from this tungstate in combination with TiO2.

The tungstates according to Fig. 7 include particularly AgWO₄, AlWO₄, CeWO₄, CuWO₄, or ZnWO₄ or these tungstates in combination with TiO₂.

In addition, the second last or last line of the table shown in Fig. 7 shows another metal oxide and another complex compound.

The structure of this metal oxide is described by the formula MeₑO_{d}.

Wherein Me is selected from the elements of group 6 of the periodic table of the elements (IUPAC nomenclature) and O is the element oxygen.

In addition, d and e can independently of each other have a value between 0 and 100.

Preferably, d and e can independently of each other have a value between 0 and 40.

Most preferably, d and e can independently of each other have a value between 0 and 24.

The metal oxide as shown in Fig. 7 is particularly WO₃.

The structure of the complex compound, however, is described by the formula AO₂MeₑO_{d}.

Wherein A is selected from the elements of group 4, Me is selected from the elements of group 6 of the periodic table of the elements (IUPAC nomenclature) and O is the element oxygen.

In addition, d and e can independently of each other take a value between 0 and 100.

Preferably, d and e can independently of each other have a value between 0 and 40.

Most preferably, d and e can independently of each other have a value between 0 and 24.

The complex compound according to Fig. 7 is particularly WO₃*TIO₂.

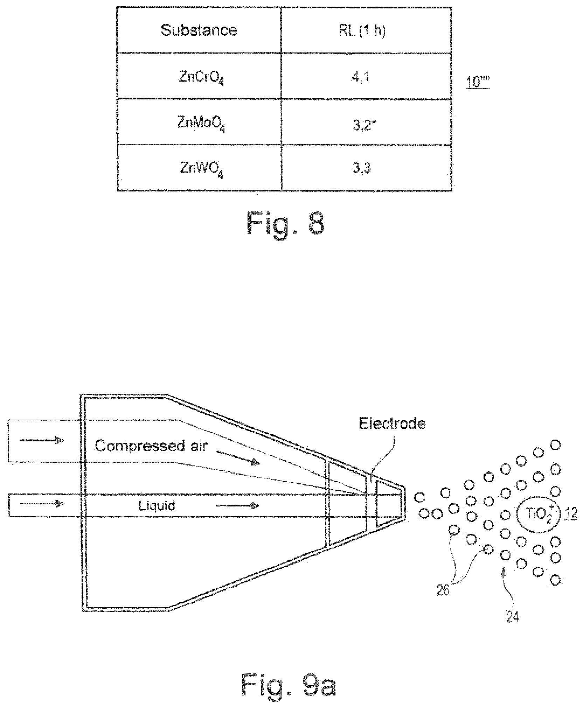

Fig. 8 shows a further tabular representation of the anti-microbial effectiveness of further embodiments of an anti-microbial coating 10''' according to the invention.

The anti-microbial effectiveness against E. coli bacteria is shown in Fig. 8 for a duration of 1 h under defined light conditions at 1600 lux.

The embodiments of the respective anti-microbial coating 10"" shown in Fig. 8 essentially have the same structural (macroscopic) and functional features as the embodiments shown in Fig. 1 and 2.

Merely the following differences shall be discussed:
The representation in Fig. 8 serves particularly to show the difference in the anti-microbial effectiveness of this anti-microbial coating 10"" with different compositions.

This coating 10"" includes particularly ZnCrO₄, ZnMoO₄ or ZnWO₄.

On the one hand, chromium oxide has a strong toxic effect.

But, the composition of zinc chromate (ZnCrO₄) according to K₂CrO₄ + Zn(NO₃)₂ --> ZnCrO₄ + 2 KNO₃ should complete the principle of the anti-microbial effect of metal acids in the form of MeXO₄ of group 6 of the periodic table of the elements (IUPAC nomenclature).

Fig. 9a shows a schematic representation of an embodiment of an electrostatic spray method for obtaining an anti-microbial coating 10, 10', 10", 10"', 10"" according to the invention.

The electrostatic spray method for coating at least one substrate 12 comprises the following steps:
- providing a substrate 12;
- coating the substrate 12 with an aqueous solution or suspension 24 in droplet form by the electrostatic spray method, the aqueous solution or suspension 24 containing at least one metal oxide and/or at least one metal salt soluble therein, whereby the aqueous solution or suspension 24 has anti-microbial properties; and
- Formation of a solid, anti-microbial coating 10, 10', 10", 10'", 10"" on the substrate 12 in the form of a matrix structure by evaporation of the aqueous and/or liquid phase from the aqueous solution or suspension 24, so that the metal oxide and/or the metal salt are contained in the matrix structure of the coating 10, 10', 10", 10'", 10"".

Before addition to the aqueous solution or suspension 24, the metal oxide is present in the form of nanoparticles with an average size of less than or equal to about 10 nm.

The aqueous solution or suspension 24 has a pH value of less than or equal to about 1.5.

Further, the metal oxide is contained in the aqueous solution or suspension 24 in a range, particularly, of about 0.1% to about 5%.

The aqueous solution or suspension 24 may also contain a complex compound.

In Fig. 9a it is also shown that during the coating of substrate 12 the microdroplets with the TiO₂ dissolved therein are electrically positively charged.

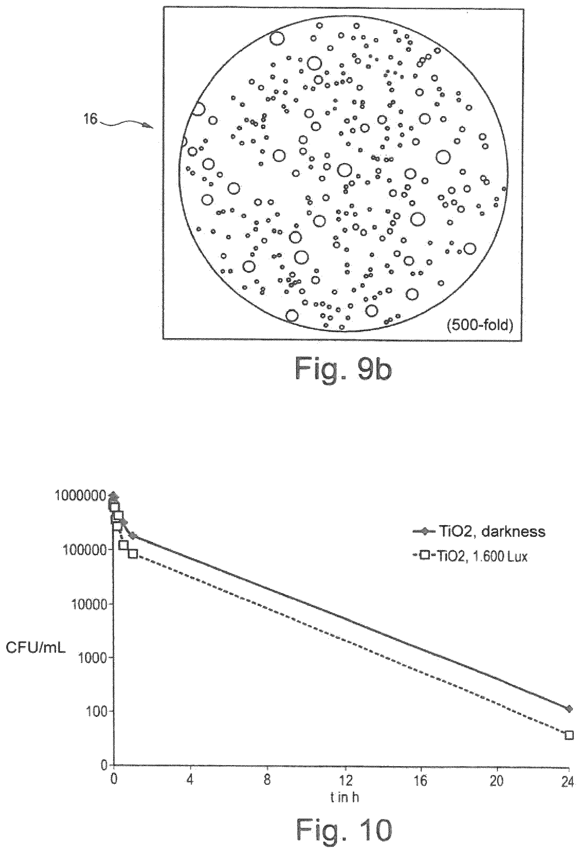

Fig. 9b shows an enlarged representation of an island 16 in this respect.

Particularly, it shows a 500-fold magnification of TiO₂ (mass concentration: 15 g/L) therein after drying under the light microscope.

It may be intended that several droplets of 26 can be combined to form a large structure.

The effectiveness of the respective embodiment of the coating 10, 10', 10", 10"', 10"" according to the invention can now be described as follows on the basis of several experimental results:
In all experiments executed, water-soluble nano titanium dioxide (average particle size of less than or equal to about 10 nm) is used in an aqueous solution 24 with a nitrate content of about 28% (pH = about 1.5).

The moisture content is 2%.

Ultimately, this behaviour determines the basic idea of converting water-soluble TiO₂ after application in the form of small droplets 26 with the electrostatic spray method described above into a solid matrix into which both soluble and insoluble (complex) compounds with a germ reducing effect can be introduced.

The deposited microdroplets 26 evaporate very quickly at room temperature within only 1 - 2 min and leave a transparent TiO₂ matrix in the form of small islands 16 (cf. Fig. 1 and 2).

Another important aspect that guided to the idea of working with water-soluble titanium dioxide as the basic matrix is the property of this oxide, as described in the literature, that after deposition from the aqueous-acidic environment (pH < about 6.8) it retains this positive charge even in the dry state.

Consequently, species in the form of Ti-O(H⁺)-Ti as well as O-Ti⁺-O occur.

Compounds with a permanent positive charge (e.g. quaternary ammonium compounds such as PHMB) are known to energize bacteria having a negative polar outer shell and thus preventing them from being transported back into the ambient air.

In addition, the positive charge leads to a structural change of the bacterial membrane and a dysfunction of the ion channels.

Therefore, cell homeostasis is brought out of balance and the microorganism dies.

As a result of the hydrophilic properties of the TiO₂ matrix (see Fig. 3), such hydrophilic surfaces of the substrate 12 have the advantage, contrary to hydrophobic surfaces, that they bind bacteria on the surface and prevent back transfer away from the coating surface.

They also facilitate cleaning, as a monomolecular water layer is formed between the dirt (i.a. cell debris) and the surface.

This property is an important first step towards improved room hygiene.

In this context, Fig. 10 shows a diagram with a comparison of the temporal germ reduction of E. coli for an embodiment of the coating according to the invention pursuant to Fig. 5 in the form of TiO₂.

To determine the experimental results for the germ reduction in the TiO₂ matrix as shown in Fig. 10, a suspension of about 15 g/L of dissolved TiO₂ (pH = about 1.5) was sprayed twice onto Petri dishes and incubated with E. coli bacteria (JIS test Z 2801 or ISO standard 22196) for 0 to 24 hours in the dark as well as under defined LED lighting conditions (1600 lux = white office light).

The result confirms a two-phase reduction with a rapid loss of vitality within the first hour and a further slow, essentially linear reduction between 1h and 24h.

The two curves also show the same progression under dark and light conditions and lead to a strong effectiveness after 24h (R_{L} > 3.5).

It can therefore be concluded that under both conditions the anti-microbial properties of the coating 10' are present independently of UV light incidence.

In methods with underlying electron transfer (redox reaction) or electron excitation (photocatalysis) a rapid death of the microorganisms would be expected.

Especially in the latter method, a curve progression would be expected which differs significantly from that of the dark reaction.

In this respect, experiments with e.g. potassium iodide starch used therein at 1600 lux on surfaces coated with TiO₂ give no indications of the formation of a blue iodine-starch complex according to the reaction: 2 J⁻ + 2 h⁺ ---> J₂ (h⁺: electron hole); J₂ + starch ---> J₂ starch (blue).

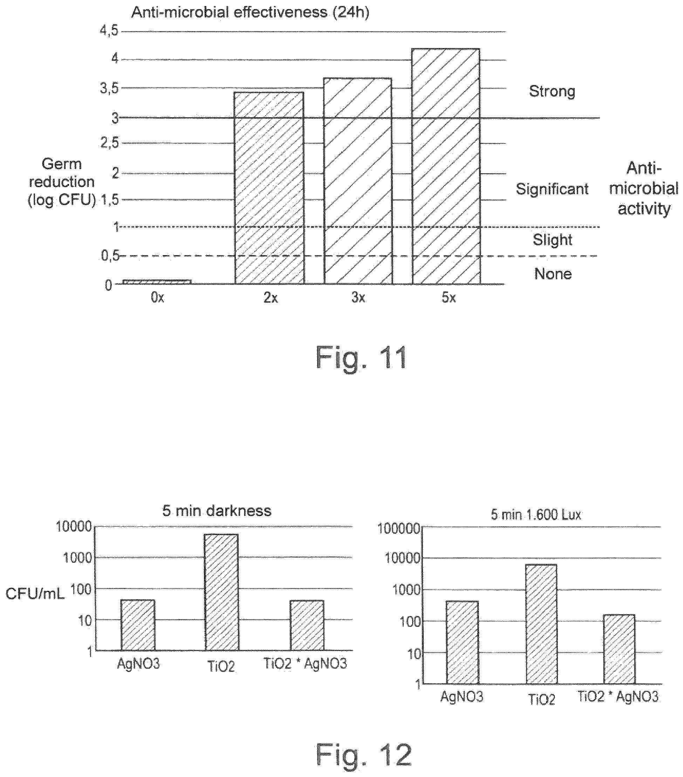

Furthermore, Fig. 11 shows a bar chart of the anti-microbial effectiveness of an embodiment of the inventive coating 10' according to Fig. 5 for 2-times, 3-times and 5-times coating of a Petri dish.

The anti-microbial coating contains a matrix of TiO₂ and silver nitrate TiO₂*AgNO₃.

The anti-microbial effectiveness of the coating against E. coli bacteria is shown in Fig. 11 after an incubation duration of 24 h under defined light conditions at 1600 lux.

In the first step, silver changes the tertiary structure of the bacterial outer membrane.

This increases their permeability, whereupon sulphur-containing enzymes of the respiratory chain and proteins responsible for DNA replication are inactivated consequently and the microorganism consequently dies.

Since this leads to a complete standstill of the cell homeostasis, which is important for survival, silver is not suspected of forming resistance.

For the TiO₂*AgNO₃ matrix described here, 500 mg AgNO₃ were dissolved in a TiO₂ suspension (about 15 g/L) and applied to square aluminium plates (1x1 cm2) by using electrosprays (experimental set-up not shown in the attached figures).

Since it is important to achieve a long-lasting anti-microbial effect by introducing silver ions, in a first study Petri dishes coated several times (2-times, 5-times, 10-times) with TiO₂*AgNO₃ rested for 2 days and were mixed with hydrochloric acid after decanting the water.

In none of the cases silver chloride (AgCI) could be detected here.

Furthermore, it is shown that the structure of the deposited TiO₂*AgNO₃ matrix is stable against 1000-times wiping with an anti-septic cloth (ethanol, benzalkonium chloride).

Thus, e.g. with a cleaning of the surface of the anti-microbial coating once a day, a lifetime of about three years can be achieved.

Already first experiments showed a strong antibacterial effectiveness (R_{L} > 3) of the TiO₂*AgNO₃ matrix against E. coli bacteria after 24-hour incubation according to the JIS test (see Fig. 11).

Subsequently, the strong anti-microbial and anti-bacterial effectiveness was confirmed for a period of 30 min to 24 h.

In addition, Fig. 12 shows two bar diagrams with a comparison of the temporal germ reduction of a coating containing TiO₂*AgNO₃ and its individual components according to Fig. 5 in darkness and brightness.

A detailed investigation of TiO₂*AgNO₃ and its individual components shows after 5 min incubation that the strong effectiveness of TiO₂*AgNO₃ in the dark (R_{L} = 3.3 ± 1.0) is dominated by the anti-microbial effectiveness of the silver cations (R_{L} = 4.3).

TiO₂ itself shows a significant effectiveness at this time (R_{L} = 2.1).

Even if the evaluation according to colony forming units per ml (CFU/ml) gives the impression that TiO₂ develops a stronger effectiveness under light than in the dark, the result of the R_{L} value at 1600 lux (R_{L} = 2.1 ± 0.9) does not show a clear tendency.

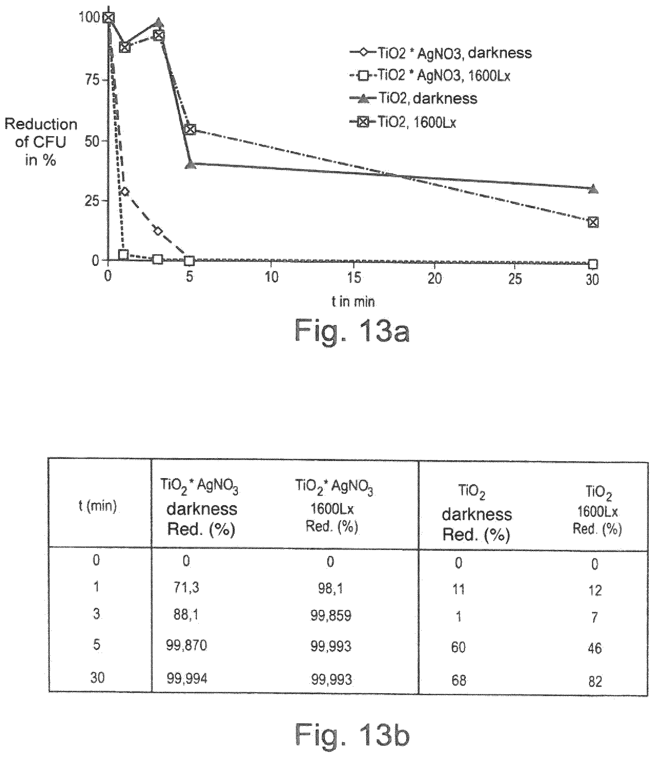

For a better understanding of the mechanism of action, two kinetics each of the anti-microbial coating with TiO₂ alone and in combination with TiO₂*AgNO₃ therefore were carried out under different light conditions according to Fig. 13a.

Thus, fig. 13a shows a diagram of a comparison of the temporal germ reduction of these two embodiments of the inventive coating 10' according to Fig. 5 in darkness and brightness (about 1600 Lux).

The evaluation is shown in percentages for a better overview.

According to Fig. 13a, 100% correspond to the respective starting concentration (about 5x10⁵ CFU).

The combination of TiO₂*AgNO₃ shows a very strong germ reduction within the first 5 minutes by up to > 99.99%.

Remarkable is the very strong germ reduction at 1600 lux of 98.1% after 1 min and 99.859% after 3 min.

The respective lower reduction numbers of this TiO₂*AgNO₃ composition matrix at 1 min (71.3%) and after 3 min (88.1%) in the darkness provide a first proof of the involvement of a light-dependent mechanism of action.

The anti-microbial properties of this coating 10' therefore may be enhanced by UV light incidence.

On the other hand, with TiO₂, the picture is not so clear.

Here, after 30 minutes, a clear difference in the reduction of germs at 1600 lux of 82% (cf. darkness: 68%) can be seen.

The reason for these fluctuations is due to the JIS test, which ultimately does not allow absolute numbers but a classification into "not, slightly, significantly and strongly effective".

For compounds with effectiveness in the range 1.0 ≤ R_{L} ≤ 3.0 the observed fluctuations are strongest, while the strongly effective AgNO₃ provides reproducible R_{L} values in the range 4.0 - 4.3.

For further illustration, Fig. 13b additionally shows the data points shown in Fig. 13a in tabular form.

The existing germ reducing property of TiO₂*AgNO₃ can be explained as follows Firstly, via the proven hydrophilicity and the positive charge of the metal oxide TiO₂ germs can be energized and retained.

In the second step, cations from the TiO₂ matrix can change the tertiary structure of the bacterial outer membrane in such a way that this membrane becomes porous and the bacteria dies.

Secondly, cationic silver has a very high oxidation potential and is able to attack the outer membrane of the microorganisms by fast electron transfers, whereby additional sulphur-containing enzymes are chemically inactivated.

These are very fast methods in terms of time, which lead to a rapid death of the bacteria.

In further in-vitro experiments a strong effectiveness of TiO₂*AgNO₃ against the Gram-positive germ Staphylococcus aureus could be proven.

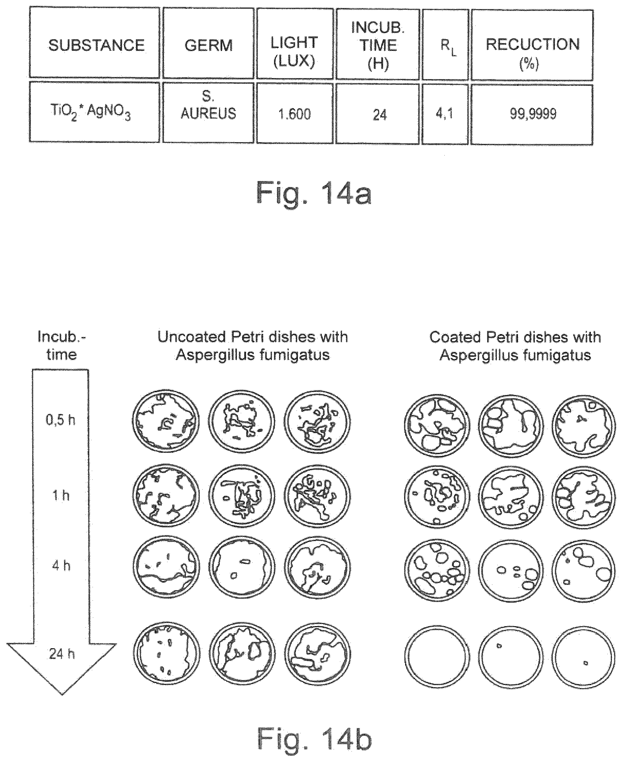

In this respect, Fig. 14a shows a tabular representation of the anti-microbial effectiveness of an embodiment of the coating 10' according to Fig. 5 against a Staphylococcus aureus germ.

The anti-microbial effectiveness of this coating 10' against the Staphylococcus aureus germ is shown in Fig. 14a after an incubation period of 24 hours under defined light conditions of about 1600 lux with R_{L} = 4.1.

For further evaluation of the potential effectiveness of TiO₂*AgNO₃ against the colonization of mould and yeast fungi, this combination with the anti-microbial coating was tested against these pathogenic germs under real conditions.

At this, coated and uncoated Petri dishes are dry-contaminated and the growth of germs is checked by means of a Contact-Slides method (RODAC method).

Fig. 14b shows in this respect a temporal reduction of an Aspergillus fumigatus germ on an uncoated Petri dish and a Petri dish coated with an embodiment of the coating 10' according to Fig. 5.

The anti-microbial coating in Fig. 14b shows a TiO₂*AgNO₃ matrix structure, as also shown in Fig. 11 to 14a.

In a 24h study, TiO₂*AgNO₃ coated Petri dishes (right figure in Fig. 14b) show a significant growth control within the first 4h and a clear reduction of germs after 24h compared to the uncoated reference Petri dish (left figure in Fig. 14b).

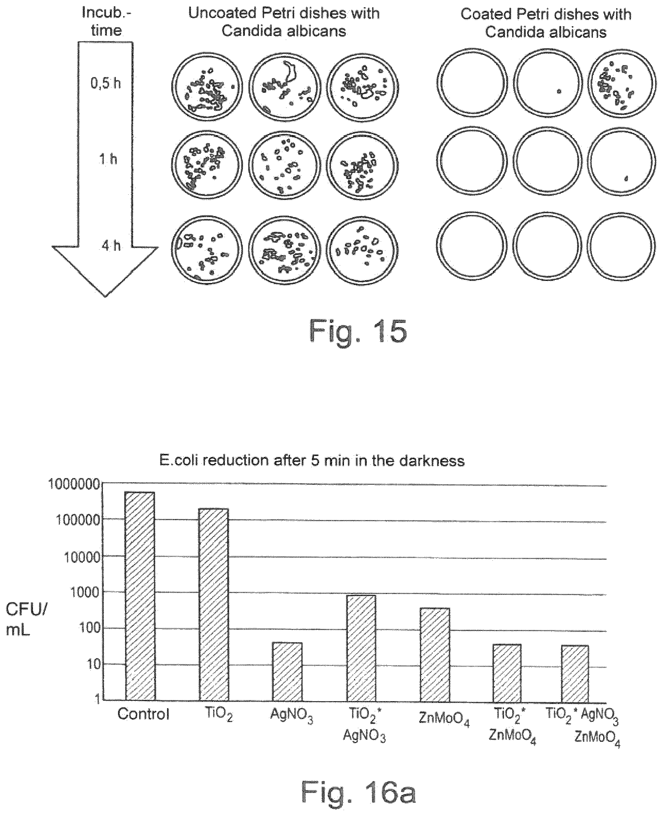

Fig. 15 shows a temporal reduction of a Candida albicans germ on an uncoated Petri dish and a Petri dish coated with an embodiment of the coating 10' as shown in Fig. 5.

The anti-microbial coating 10' in Fig. 15 also shows a TiO₂*AgNO₃ matrix structure as also shown in Fig. 11 to 14b.

Also, during a 24h study, the Petri dishes coated with TiO₂*AgNO₃ (right figure in Fig. 15) showed a strong reduction of Candida albicans germ by up to 4 logarithmic levels (R_{L} = 3.7) already after 4 hours incubation compared to the uncoated reference Petri dish (left figure in Fig. 14b).

The anti-microbial coating 10' of substrates according to Fig. 11 to 15 with TiO₂*AgNO₃ is conceivable e.g. in outdoor areas (e.g. building walls, surfaces of public transport vehicles or road surfaces).

Therefore, the toxicological behaviour of this coating towards daphnia (water flea) as well as Artemia nauplii (brine shrimp) was investigated.

Here, Petri dishes were coated 0-, 2-, 5- and 10-times with TiO₂*AgNO₃ and these aquatic organisms were cultivated for three days therein. As a result, these animals show the same vitality in the coated plates as in the uncoated ones.

After finishing the experiments, the biological matrix was filtered off and hydrochloric acid was added to the clear aqueous solution.

However, no formation of silver chloride according to the reaction Ag⁺ + Cl⁻ -> AgCl could be observed.

This means that the silver ions are retained in the TiO₂ matrix.

Fig. 16a also shows a bar chart with a comparison of the temporal E. coli germ reduction of six embodiments of the inventive coating 10', 10" according to Fig. 5 and Fig. 6 after 5 min incubation time in the darkness.

In this respect, the anti-microbial coating contains a combination of the TiO₂ matrix with oxides and salts of group 6 (IUPAC nomenclature) of the periodic table of the elements.

Since chromium compounds are characterized by a very pronounced toxicity, the focus was on the oxides and salts of the elements molybdenum (Mo) and tungsten (W).

Their redox potential and acidic properties are mentioned as possible mechanisms of action.

In the search for alternatives to the soluble silver nitrate (AgNO₃), initial experiments were therefore carried out with the slightly soluble zinc molybdate (ZnMoO₄), which are shown in Fig. 16a.

The zinc molybdate (ZnMoO₄) was applied alone (about 5.0 g/L) and in combination with the TiO₂ matrix described above (about 15 g/L) to a substrate 12 via electrospray and tested against E. coli.

ZnMoO₄ (R_{L} = 3.2) shows a weaker germ reducing effect compared to AgNO₃ (R_{L} = 4.3), but a stronger germ reducing effect compared to TiO₂ (R_{L} = 2.1).

Interestingly, the combination TiO₂*ZnMoO₄ is significantly more effective (R_{L} = 4.1) than the two individual components TiO₂ and ZnMoO₄.

This strong effectiveness cannot be increased even by adding AgNO₃ to the TiO₂*ZnMoO₄ matrix.

Additional tests in combination with another germ Staphylococcus aureus confirm the germ reducing effectiveness of ZnMoO₄ and TiO₂*ZnMoO₄ in the JIS test at 1600 lux light incidence.

Due to the anti-microbial potential of the substance class of molybdates as well as molybdenum oxide, the following compounds were each sprayed onto a substrate 12 in the form of an anti-microbial coating as described above and tested against E. coli bacteria within 24 hours incubation time and a light incidence of 1600 lux.

The corresponding molybdates and the molybdenum oxide and their anti-microbial effectiveness after 1h and 24h can be taken from Fig. 6.

In addition, ammonium heptamolybdate (NH₄)₆Mo₇O₂₄ was tested, which has an anti-microbial effectiveness of 1.4 after 1h and 4.3 after 24h under these experimental conditions.

The ammonium heptamolybdate (NH₄)₆Mo₇O₂₄ used for the synthesis has a significant effectiveness already after 1h.

However, the sodium molybdate (Na₂MoO₄), which is also highly soluble, shows no anti-microbial effect even after 24 h (see Fig. 6).

In addition to the zinc molybdate (ZnMoO₄) as described above, silver molybdate (Ag₂MoO₄) could be determined as a further strongly germ-reducing compound.

In analogy to the molybdates and the molybdenum oxide, the corresponding tungstates and tungsten oxide were synthesized and tested against E. coli in the JIS test at 1600 lux.

The starting material for the syntheses was sodium tungstate, which reacts with the soluble salts (chloride, nitrate, sulphate) of aluminium, cerium, cobalt, copper, nickel, manganese, silver and zinc to form slightly soluble salts of the form XₙWO₄.

The corresponding tungstates and the tungsten oxide and their anti-microbial effectiveness after 1h and 24h can be taken from Fig. 6 and 7.

In analogy to sodium molybdate, tungsten molybdate shows no antimicrobial effectiveness after an incubation period of 1h and 24h as well.

With the exception of manganese tungstate, all other tungstates and even the tungsten oxide have a significant to strong effectiveness against E. coli.

In analogy to zinc molybdate, zinc tungstate (ZnWO₄) alone and in the combination TiO₂*ZnWO₄ shows a strong antimicrobial effectiveness within 24 h.

These are also observed for silver tungstate (AgWO₄), aluminium tungstate (AlWO₄), cerium tungstate (CeWO₄), copper tungstate (CuWO₄) and for their respective combination with the TiO₂ matrix.

Furthermore, tungsten oxide also has this strong effectiveness as well as its combination with the TiO₂ matrix.

When combining the mixed suspensions of metal tungstate and TiO₂, it is noticeable that the partly very colourful tungstates together with TiO₂ form a colourless complex.

As examples, the combination of TiO₂ with CeWO₄ (yellow) and CuWO₄ (green) are shown here.

These observations lead to the assumption that the partially positively charged TiO₂ crystals form a complex of the form O-(Ti)⁺.....⁻W(O₄) or O-(Ti)⁺......⁻O-W(O₃) with the negatively charged tungstate anion.

Possibly a three-center complex may also be formed between the positively charged TiO₂, the positive metal cation (e.g. Ce²⁺) and the tungstate anion.

In any case, the electronic states change in such a way that the colourfulness of the original tungstates is lost.

The yellow tungsten oxide (WO₃) also leads to a colourless suspension with TiO₂ through complexation.

In summary, it can be stated that due to the anti-microbial effectiveness of complexes of the type TiO₂*XₙMeO₄ (Me = Cr, Mo or W; X = Mn, Fe, Co, Ni, Cu, Zn, Ru, Rh, Pd, Ag, Cd, Re, Os, Ir, Pt, Au, Hg, as well as Ce and the lanthanides; n = 0 - 24), they can be applied by means of electrospray to all types of surfaces and develop an anti-microbial effectiveness.

Such use of a coating material can thus be provided for producing an anti-microbial coating 10, 10', 10", 10"', 10"" as described above on a surface 14 of a substrate 12, said coating 10 containing at least one metal oxide and/or metal salt as described above.

The coating 10, 10', 10", 10'", 10"" is thereby obtained by an electrostatic spray method as described above.

The surface 14 of the coating 10, 10', 10", 10''', 10'''' may be a work surface or may be in contact, at least temporarily, with ambient air, fluids or liquids.

Furthermore, TiO₂*XₙMeO₄ can be added to lacquers and paints (e.g. anti-fouling) in the form of the suspension or as a solid after drying, thus giving them anti-microbial properties.

In this case, a TiO₂*XₙMeO₄ complex is added to the coating material, which is especially designed as an anti-fouling lacquer or anti-fouling paint, in the form of a suspension or as a solid after drying.

Alternatively, the coating material could be designed as a sol gel or a synthetic resin, for instance a melamine resin or a polyurethane.

The colourless complexes of the form TiO₂*XₙMeO₄ can be incorporated into plastics (e.g. silicone, PU, etc.) or building materials (e.g. cement), which thus become anti-microbial.

Both the molybdates XₙMoO₄ and the tungstates XₙWO₄ are characterized by a very poor solubility.

These compounds show a strong precipitating effect in the suspensions with TiO₂, which makes storage in an aqueous medium difficult and possibly leads to the fact that not always the correct concentration is transferred with the electrospray.

Both in the synthesis of molybdenum oxide from ammonium heptamolybdate and in the preparation of tungsten oxide from sodium tungstate under acidic conditions, it has been noticed that the resulting oxides are difficult to filter due to their gel-like character.

However, this observation helped to generate a suitable suspension for the above-mentioned poorly soluble compounds.

If the acidic TiO₂ nano-suspension (pH = 1.5) is first mixed with 50 - 150 mg ammonium heptamolybdate, visible streaks of TiO₂ ... MoO₃ or MoO₃*(H₂O)ₙ are formed.

If ZnMoO₄ is now added, it remains stable in abeyance over a longer period of time without precipitating.

This opens up new approaches for the representation with mixed components, which contain MoO₃, WO₃ and/or the above-mentioned salts in addition to the parent matrix TiO₂.

With the help of these findings for improving the overall formulation, new combinations of TiO₂ with further poorly soluble metal oxides (AgO, CuO, SiO₂, ZnO) or matrix crosslinkers (Na₂SiO₄, Na₂[B₄O₅(OH)₄]) are opened up.

These could have a positive effect on the anti-microbial effectiveness as well as on the age resistance and robustness of the deposited TiO₂ matrix.

As an alternative to TiO₂ it could be proven, for example, that the water-soluble nano-zirconium oxide ZrO₂ can also be applied to a transparent matrix comparable to TiO₂ (same group in periodic table of the elements) by means of the electrostatic spray method.

In an exemplary experiment on the transferability of the TiO₂ matrix principle to ZrO₂, 15 g/L nano-ZrO₂ were dissolved with 0.5 g AgNO₃ and tested, after spraying on, against E. coli for 1 h in the JIS test (1600 lux).

The effectiveness of this combination here is R_{L} = 4.3 (strong).

This proofed that ZrO₂ can be used successfully as a replacement for TiO₂ or in combination with it.

Similarly, hafnium oxide as a group relative of the IV. subgroup (Ti, Zr, Hf) should be usable.

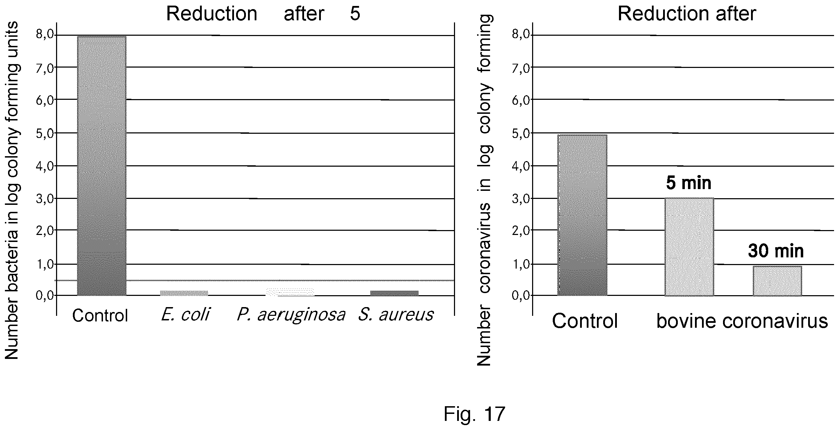

Fig. 17 shows examples for the effect of the use of an antimicrobial coating 10 of a substrate 12 for inactivation of infectious agents.

In particular, bar diagrams show the effect of the use of an antimicrobial coating 10 of a substrate 12 for inactivation of different infectious agents.

The coating 10 is obtained by applying the coating 10 on a surface 14 of the substrate 12 by means of an electrostatic spraying method.

The coating 10 comprises at least one metal oxide and/or at least one metal salt.

In this embodiment, a surface 14 has been exposed to different infectious agents.

In this embodiment, the surface 14 has been exposed to bacteria, in particular E. coli, P. aeruginosa or S aureus.

In this embodiment, the surface 14 has also been exposed to a coronavirus, in particular a bovine coronavirus.

In this embodiment, the surface 14 has further been exposed to an antimicrobial coating 10.

A control group is shown, which indicates the infectious agents not treated with any coating 10.

In this embodiment, the coating 10 has been applied to the surface 14 of a substrate 12 after exposure of the surface 14 to the infectious agent.

However, it could be generally possible that the surface 14 is first coated with the antimicrobial coating and then the infections agent is applied and inactivated by the coating 10.

In this embodiment, the number of bacteria on the surface 14 (in log colony forming units) is reduced by more than 99.99999%, 5 minutes after application of the antimicrobial coating 10.

Further, in this embodiment, the number of bovine corona virus (in log colony forming units) is reduced significantly 5 minutes after application of the antimicrobial coating 10, and is further reduced significantly 30 minutes after application of the antimicrobial coating 10.

In other words, the antimicrobial coating 10 can be applied for inactivation of infectious agents, such as bacteria or viruses.

Not shown in Fig. 17 is that the effect of the antimicrobial coating 10 shown for bovine coronavirus is similar or identical for other viruses of the family of Coronaviridae, especially viruses of the subfamily Orthocoronavirinae, such as the severe acute respiratory syndrome coronavirus, the severe acute respiratory syndrome coronavirus 2 or the Middle East respiratory syndrome-related coronavirus.

Not shown in Fig. 17 is that the effect of the antimicrobial coating shown for bovine coronavirus is similar or identical for any coronavirus species, due to the comparable structure of the different coronavirus species (Alphacoronavirus type species Human coronavirus 229E, Human coronavirus NL63, Miniopterus bat coronavirus 1, Miniopterus bat coronavirus HKU8, Porcine epidemic diarrhea virus, Rhinolophus bat coronavirus HKU2, Scotophilus bat coronavirus 512, Betacoronavirus species Betacoronavirus 1 (Bovine Coronavirus, Human coronavirus OC43), Human coronavirus HKU1, Murine coronavirus, Pipistrellus bat coronavirus HKU5, Rousettus bat coronavirus HKU9, Severe acute respiratory syndrome-related coronavirus (SARS-CoV, SARS-CoV-2), Tylonycteris bat coronavirus HKU4, Middle East respiratory syndrome-related coronavirus, Hedgehog coronavirus 1 (EriCoV); Gammacoronavirus species: Beluga whale coronavirus SW1, Infectious bronchitis virus; Deltacoronavirus species: Bulbul coronavirus HKU11, Porcine coronavirus HKU15).

Not shown are further examples for the effect of the use of an antimicrobial coating 10 of a substrate 12 for inactivation of infectious agents.

For instance, in addition to the the effect of the use of an antimicrobial coating 10 of a substrate 12 for inactivation of infectious agents under the conditions shown above, further infectious agents and/or conditions have been tested.

In another example, the use of an antimicrobial coating according to the present invention caused 90% inactivation of coronavirus. after 24h exposure to the antimicrobial coating.

Overall, the antimicrobial coating 10 can be applied for inactivation of infectious agents, such as various bacteria, fungi, moulds or viruses:
For instance, the use of an antimicrobial coating 10 according to the present invention caused 99.9999% inactivation of Escherichia coli after 5 minutes exposure to the antimicrobial coating 10.

Further, the use of an antimicrobial coating 10 according to the present invention caused 99.9999% inactivation of Pseudomonas aeruginosa after less than 60 minutes exposure to the antimicrobial coating 10.

Further, the use of an antimicrobial coating 10 according to the present invention caused 99.9999% inactivation of staphylococcus aureus after less than 120 minutes exposure to the antimicrobial coating 10.

Further, the use of an antimicrobial coating 10 according to the present invention caused 99.98% inactivation of Candida albicans or Candida auris after 60 minutes exposure to the antimicrobial coating 10.

Further, the use of an antimicrobial coating 10 according to the present invention caused 99.9% inactivation of Aspergillus fumigatus or Penicilliums sp. after 4-24h exposure to the antimicrobial coating 10.

Further, the use of an antimicrobial coating 10 according to the present invention caused 99.999% inactivation of norovirus. after 24h exposure to the antimicrobial coating 10.

Further, the use of an antimicrobial coating according to the present invention caused more than 99% inactivation of rhinovirus. after 24h exposure to the antimicrobial coating 10.

In general, iinactivation of an infectious agent may be understood as reducing completely or reducing partially the infectiousness of an infectious agent. Alternatively, and/or additionally, inactivation of an infectious agent may be understood as rendering an infectious agent non-viable and/or no longer capable of growing, replicating, infecting a subject or causing disease. The object of viral inactivation, for instance, is to improve viral safety so that transmissions no longer occur.

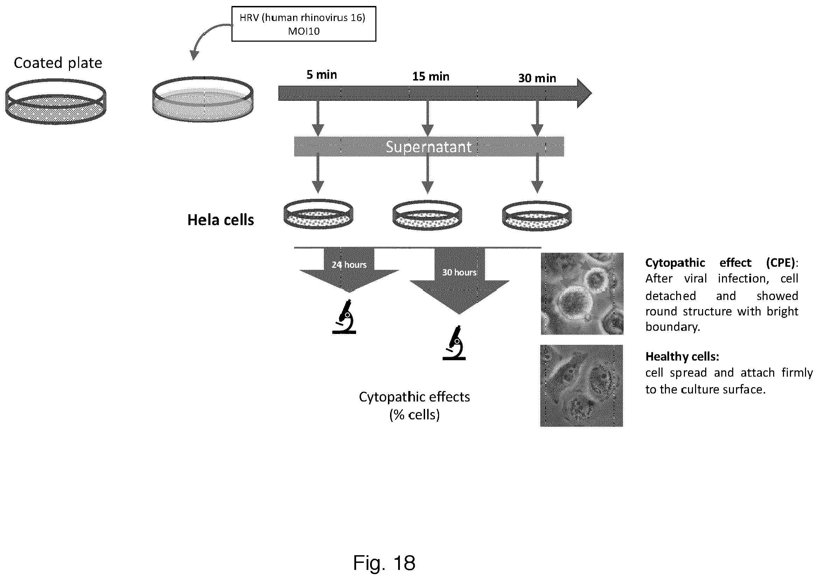

The effect of the use of an antimicrobial coating 10 of a substrate 12 for inactivation of rhinoviruses is shown in more detail in Figs. 18-19.

Fig. 18 shows an example of a workflow for testing the effect of the use of an antimicrobial coating 10 of a substrate 12 for inactivation of human rhinovirus 16 HRV.

A substrate 12, in particular a plate, coated with TiO₂AgNO₃ (here referred to as HEC110) is exposed to human rhinovirus 16 HRV for either 5 minutes, 15 minutes or 30 minutes.

Further, a substrate 12, in particular a plate, coated with (TiO₂)₁₀*H⁴SiW₁₂O₄₀ (here referred to as HEC117) is exposed to human rhinovirus 16 HRV for either 5 minutes, 15 minutes or 30 minutes.

After exposure for 5 minutes, 15 minutes or 30 minutes, the supernatant of the coated plates, comprising the human rhinovirus 16 HRV exposed to the respective coating for the respective period of time is transferred to HeLa cells (grown in plates).

This can be referred to as "infection" of the cells with the pre-treated virus.

HeLa cells infected with human rhinovirus 16 HRV previously not exposed to any coating are used as a control (non-coated group). This can also be referred to as positive control

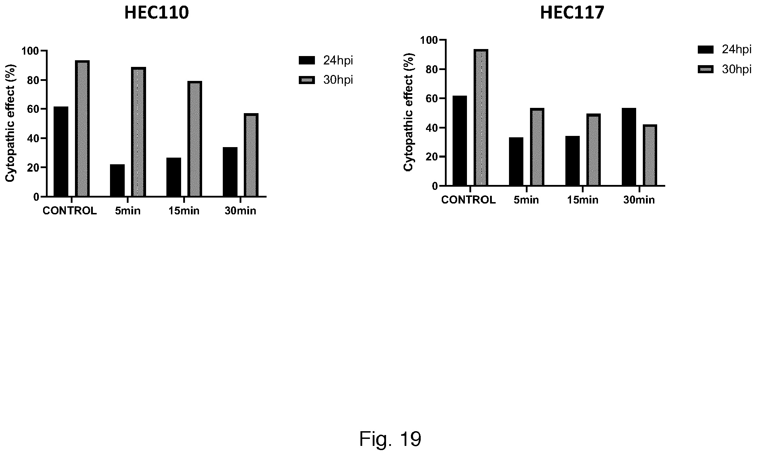

First, 24 hours after infection of HELA cells, the cytopathic effect of the respective virus supernatant is assessed, cf. Fig. 19.

Second, 30 hours after infection of HELA cells, the cytopathic effect of the respective virus supernatant is assessed, cf. Fig. 19.

Cytopathic effect was assessed by assessing cell detachment from the culture plate and assessing different cell morphology (round structures, bright boundary) after viral infection.

The virus previously incubated with HEC110 and HEC17 showed less cytopathic effects (compared to the virus not incubated with any antimicrobial coating) 24 hours after infection and HeLa cells could maintain the same morphology as the non-infected group.

HEC110 showed a fast anti-viral effect within 24 hours after virus infection (hours post infection, hpi).

However, this effect did not suppress the virus propagation for long-term. Longer incubation time of HEC110 and virus (at least 30 min) could have a persistent anti-viral effect.

Compared to HEC110, HEC117 showed a more persistent anti-viral effect.

HEC117 showed a persistent anti-viral effect after short-term incubation with human rhinovirus (5 and 15 minutes) compared to HEC110.

With the increase in the incubation time of coating plate and virus, HEC110 and HEC17 can display a better anti-viral effect.

Overall, this proves the anti-viral effect of HEC117 and HEC 110.

In a further example (not shown), an antiviral effect of nano-TiO₂ or (TiO₂)₁₀*H₄SiW₁₂O₄₀ used as surface coating 10 on norovirus was shown.

In a further example (not shown), the antibacterial effect of (TiO₂)₁₂*SiW₁₂O₄₀ was shown (for Escherichia coli and Staphylococcus aureus).

In a further example (not shown), the antiviral effect of (TiO₂)₁₂*SiW₁₂O₄₀ was shown (for norovirus).

In a further example (not shown), the antibacterial effect of (TiO₂)₁₂*PW₁₂O₄₀ was shown (for Escherichia coli).

In a further example (not shown), the coating comprises between 0.5% and 10% of a compound comprising nano-TiO₂, AgNO₃ and/or fumed silica, and is especially designed as a sole gel (tetrahydrosilicane/HNO₃/alkyl alcohol), showing antimicrobial effects. The effect is, however, not dependent on the type of sole gel.

In a further example (not shown), the coating comprises 5% (TiO₂)₁₀*SiW₁₂O₄₀ and is especially designed as a sole gel (tetrahydrosilicane/HNO₃/alkyl alcohol). The effect is, however, not dependent on the type of sole gel.

In a further example (not shown), the coating comprises 0.5-10% (TiO₂)₃*ZnMoO₄ and is especially designed as a synthetic resin, in particular a melamine resin. This coating applied to a surface of a substrate showed antibacterial effects (significant reduction of colony forming units of Staphylococcus aureus).

In a further example (not shown), the coating 10 comprises (TiO₂)₃*ZnMoO₄ and is especially designed as a polyurethane, showing antimicrobial effects. In this example, the antimicrobial effect can be enhanced by grinding the surface after hardening of the coating 10.

In a further example (not shown), (TiO₂)*ZnMoO₄ was compounded to 1-10% with granules and processed in a 3D printing process to form a three-dimensional object, which shows a strong effectiveness against Escherichia coli.

### List of reference symbols

- 10: Antimicrobial coating
- 12: Substrate
- 14: Surface of the substrate
- 16: Island
- 18: Central region
- 20: Edge region rising towards outside
- 22: Wrinkles
- 24: Aqueous solution or suspension
- 26: Droplet

- 10': Antimicrobial coating
- 10": Antimicrobial coating
- 10'": Antimicrobial coating
- 10"": Antimicrobial coating

- hpi: hours post infection

## Claims

1. The use of an antimicrobial coating (10, 10', 10", 10"', 10"") of a substrate (12) for inactivation of an infectious agent, wherein the coating (10, 10', 10", 10''', 10"") is obtained by applying the coating (10, 10', 10", 10"', 10"") on a surface (14) of the substrate (12) by means of an electrostatic spraying method, and wherein the coating (10, 10', 10", 10"', 10"") comprises at least one metal oxide and/or at least one metal salt.

2. The use of an antimicrobial coating (10, 10', 10", 10'") according to claim 1, **characterized in that** the infectious agent is a virus, especially an enveloped virus, especially a virus of the family Coronaviridae, especially a virus of the subfamily Orthocoronavirinae, such as the severe acute respiratory syndrome coronavirus, the severe acute respiratory syndrome coronavirus 2 or the Middle East respiratory syndrome-related coronavirus.

3. The use of an antimicrobial coating (10, 10', 10", 10'") according to claim 1 or claim 2, **characterized in that** the coating (10, 10', 10", 10'") comprises at least one complex compound.

4. The use of an antimicrobial coating (10, 10', 10", 10"', 10"", 10"") according to claim 1 or claim 2, **characterized in that** the structure of the metal oxide is described by the formula A_{c}O_{d}, wherein A is selected from the elements of group 4 of the periodic table of the elements (IUPAC nomenclature) and O is the element oxygen, wherein c and d, independently of each other, can assume a value between 0 and 24.

5. The use of the antimicrobial coating (10, 10', 10", 10"', 10"") according to claim 4, **characterized in that** the structure of the metal oxide is described by the formula AO₂, wherein A is selected from the elements of group 4 of the periodic table of the elements (IUPAC nomenclature) and O is the element oxygen, the metal oxide being in particular TiO₂, ZrO₂ or HfO₂.

6. The use of an antimicrobial coating (10, 10', 10", 10"', 10"") according to claim 1 or claim 2, **characterized in that** the structure of the metal oxide is described by the formula MeₑO_{d}, wherein Me is selected from the elements of group 6 of the periodic table of the elements (IUPAC nomenclature) and O is the element oxygen, wherein d and e, independently of each other, can assume a value between 0 and 100, preferably 0 and 40, most preferably 0 and 24.

7. The use of an antimicrobial coating (10, 10', 10", 10'") according to claim 3, **characterized in that** the structure of the complex compound is described by the formula A_{c}B_{d}XₙMeₑB_{f} or XₙMeₑB_{f}, wherein A is selected from the elements of group 4, B is selected from the elements of group 15 or 16, X is selected from the elements of groups 5, 7, 8, 9, 10, 11, 12, 13, 14, 15 from the lanthanides or the actinides, and Me is selected from the elements of group 6 of the periodic table of the elements (IUPAC nomenclature), and wherein c, d, n, e and f, independently of one another, can assume a value between 0 and 1000, preferably 0 and 24.

8. The use of an antimicrobial coating (10, 10', 10", 10'") according to claim 7, **characterized in that** the structure of the complex compound is described by the formula AO₂XₙMeO_{y} or XₙMeO_{y}, wherein A is selected from the elements of group 4, X is selected from the elements of groups 5, 7, 8, 9, 10, 11, 12, 13, 14, 15 from the lanthanides or the actinides, and Me is selected from the elements of group 6 of the periodic table of the elements (IUPAC nomenclature) and O is the element oxygen, wherein n can assume a value between 0 and 24 and/or y can assume a value between 0 and 1000 and the complex compound comprising in particular molybdates, polyoxomolybdates, tungstates or chromates.

9. The use of an antimicrobial coating (10, 10', 10", 10'") according to claim 3, **characterized in that** the structure of the complex compound is described by the formula AO₂MeₑO_{d}, wherein A is selected from the elements of group 4, Me is selected from the elements of group 6 of the periodic table of the elements (IUPAC nomenclature) and O is the element oxygen, wherein d and e, independently of each other, can assume a value between 0 and 100, preferably 0 and 40, most preferably 0 and 24.

10. The use of an antimicrobial coating (10, 10', 10", 10"', 10"") according to claim 1 or claim 2, **characterized in that** the structure of the metal oxide and/or of the metal salt is described by the formula AO₂XBO₃ or XBO₃, wherein A is selected from the elements of group 4, X is selected from the elements of groups 5, 7, 8, 9, 10, 11, 12, 13, 14, from the lanthanides or the actinides, and B is selected from the elements of group 15 or 16 of the periodic table of the elements (IUPAC nomenclature) and O is the element oxygen, and the metal oxide and/or the metal salt being in particular TiO₂AgNO₃ or AgNO₃.

11. The use of an antimicrobial coating (10, 10', 10", 10''', 10'''', 10'''') according to any of the preceding claims, **characterized in that** the coating (10, 10', 10", 10"', 10"") is designed in the form of a matrix structure which comprises a plurality of islands (16) spaced apart from one another, and wherein the islands (16) have a diameter in a range in particular from about 0.1 µm to about 500 µm, preferably from about 1 µm to about 200 µm, particularly preferably from about 2 µm to about 100 µm, and wherein the islands (16) are each spaced apart from one another in accordance with their diameter.

12. The use of an antimicrobial coating (10, 10', 10", 10"', 10"") according to claim 11, **characterized in that** the islands (16) comprise clusters formed by TiO₂ and ZnMoO₄.

13. The use of an antimicrobial coating (10, 10', 10", 10"', 10"", 10"") according to claim 11 or claim 12, **characterized in that** the islands (16) have a surface which is formed like a pan with a central region (18) and an edge region (20) rising radially outwards with respect thereto.

14. The use of an antimicrobial coating (10, 10', 10", 10"', 10"", 10"") according to any of claims 11 to 13, **characterized in that** the islands (16) have a convex surface which is formed with a central region and an edge region (20) that flattens out radially outwards with respect thereto.

15. The use of an antimicrobial coating (10, 10', 10", 10"', 10"", 10"") according to any of claims 11 to 14, **characterized in that** the surface of the islands (16) has a wrinkled structure, the wrinkles (22) each having a width of in particular about 10 µm, preferably about 5 µm, particularly preferably about 2 µm, so that the surface of the islands (16) of the matrix structure is enlarged.

16. The use of an antimicrobial coating (10, 10', 10", 10"', 10"") according to any of the preceding claims, **characterized in that** the surface of the coating (10, 10', 10", 10''', 10"") has hydrophilic properties.

17. The use of an antimicrobial coating (10, 10', 10", 10"', 10"", 10"") according to any of the preceding claims, **characterized in that** the antimicrobial properties of the coating (10, 10', 10", 10"', 10""') are available independently of light incidence, in particular UV light incidence.

18. The use of an antimicrobial coating (10, 10', 10", 10"', 10"") according to claim 17, **characterized in that** the antimicrobial properties of the coating (10, 10', 10", 10'", 10"") can be enhanced by light incidence, in particular UV light incidence.

19. The use of a coating material for producing an antimicrobial coating (10, 10', 10", 10'", 10"") on a surface (14) of a substrate (12) for inactivation of an infectious agent, wherein the coating (10, 10', 10", 10"', 10"") comprises at least one metal oxide and/or at least one metal salt.

20. The use of a coating material (10, 10', 10", 10'") according to claim 19, **characterized in that** the infectious agent is a virus, especially an enveloped virus, especially a virus of the family Coronaviridae, especially a virus of the subfamily Orthocoronavirinae, such as the severe acute respiratory syndrome coronavirus, the severe acute respiratory syndrome coronavirus 2 or the Middle East respiratory syndrome-related coronavirus.

21. The use according to claim 19 or claim 20, **characterized in that** a surface of the coating (10, 10', 10", 10"', 10"") is a working surface and/or is in contact at least temporarily with the ambient air and/or fluids and/or liquids.

22. The use according to any of claims 19 to 21, **characterized in that** the coating material is available in the form of an anti-fouling lacquer and/or an anti-fouling paint, a sol gel, a synthetic resin, a silicone or a polyurethane, with at least one complex, in particular at least one TiO₂*XₙMeO₄₋ complex, being added to the coating material in the form of a suspension or as a solid after drying.
